# EUROPÄISCHE PATENTSCHRIFT

(11) **EP 0 316 283 B1**
(45) Veröffentlichungstag und Bekanntmachung des Hinweises auf die Patenterteilung: **22.02.1995**
(21) Anmeldenummer: 88810775.2
(22) Anmeldetag: 10.11.1988
(51) Int. Cl.: F16M 7/00

(54) **Lastaufnahmevorrichtung**
Supporting device
Dispositif de support

(30) Priorität: 11.11.1987 CH 4400/87
(43) Veröffentlichungstag der Anmeldung: 17.05.1989
(73) Patentinhaber: Stillhart, Peter, CH-5200 Lauffohr-Brugg (CH)
(72) Erfinder: Stillhart, Peter, CH-5200 Lauffohr-Brugg (CH)
(74) Vertreter: Klunker . Schmitt-Nilson . Hirsch

(56) Entgegenhaltungen:
- AU-B- 24 420
- CH-A- 369 320
- CH-A- 658 897
- DE-A- 2 304 132
- FR-A- 1 550 240

## Beschreibung

Die Erfindung bezieht sich auf eine Lastaufnahmevorrichtung zum Verankern und/oder ausgerichteten Aufstellen von Maschinen, Aggregaten und dergleichen auf einem Unterbau, aufweisend:
(a) einen unteren Sockel zum Aufsetzen auf den Unterbau, welcher Sockel eine axiale Bohrung mit Innengewinde aufweist;
(b) ein an der Oberseite konkav ausgebildetes Lagerschalenteil, das mit einem nach unten ragenden Gewindeschaft in das Innengewinde des Sockels eingeschraubt und durch Verdrehen höhenverstellbar ist;
(c) einen auf dem Lagerschalenteil angeordneten, an seiner Unterseite konvexen Druckring, der relativ zu dem Lagerschalenteil winkelbeweglich ist; und
(d) eine axiale Durchtrittsöffnung in dem Lagerschalenteil, so daß eine Spannschraube durch das Lagerschalenteil und den Druckring hindurchführbar ist.

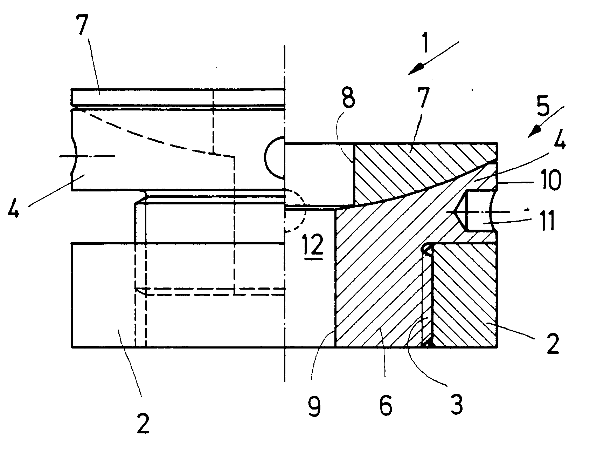

Eine derartige Lastaufnahmevorrichtung ist aus dem Dokument CH-A-369 320, Ausführungsbeispiel gemäß Fig. 1 bis 3, bekannt. Bei dieser Vorrichtung endet die das Innengewinde aufweisende Bohrung an einer unteren Schulter, gegen die sich von unten her eine Scheibe für einen Spannbolzen abstützt.

Der Erfindung liegt die Aufgabe zugrunde, eine Vorrichtung zur Aufnahme bzw. Befestigung, Nivellierung oder Ausrichtung von Maschinen oder Aggregaten der eingangs genannten Art zu schaffen, die sich durch eine geringere Bauhöhe auszeichnet und die ohne Einbauvorbereitungen oder besondere Vorkehrungen montiert werden kann.

Zur Lösung dieser Aufgabe ist die Vorrichtung erfindungsgemäß dadurch gekennzeichnet,
(e) daß die axiale Bohrung bis zur unteren Abschlußfläche des Sockels durchgeht;
(f) und daß der Gewindeschaft ein Feingewinde aufweist.

In dem Dokument CH-A-369 320, Ausführungsbeispiel gemäß Fig. 4 bis 6, ist eine Vorrichtung zum Aufstellen von Maschinen offenbart, die aus einem unteren, in eine Fundamentaussparung einzusetzenden Bestandteil und einem oberen Bestandteil besteht. Der obere Bestandteil ist mit dem unteren Bestandteil unter Zwischenfügung von Druckkissen mittels Schrauben verbunden. Der obere Bestandteil ist analog der im einleitenden Absatz wiedergegebenen Lastaufnahmevorrichtung aufgebaut, wobei außerdem die axiale Bohrung bis zur unteren Abschlußfläche des oberen Bestandteils durchgeht.

Die erfindungsgemäße Ausführung gestattet eine rationelle Herstellung und Montage der Vorrichtung. Durch die niedrige Bauform wird ein hohes Standvermögen sowie eine unmittelbare Verbindung erreicht.

Besonders bei der Anpassung zweier zu kuppelnder Wellen gleicher oder unterschiedlicher Aggregate, beispielsweise Motor und Getriebe, erweist sich die Verwendung solcher Vorrichtungen als vorteilhaft. Die Vorrichtungen dienen ebenso der Nivellierung und Befestigung von Teilen der genannten Art am Boden oder erhöht auf Rahmen, Konsolen oder Ständern.

Bei der erfindungsgemäßen Vorrichtung kann vorzugsweise die konzentrische Durchtrittsöffnung in dem Lagerschalenteil zur Durchführung einer in den Unterbau einschraubbaren Spannschraube vorgesehen sein.

Die minimal einstellbare Höhe der erfindungsgemäßen Vorrichtung kann durch die von der Lagerschale des Auflagers und dem nach unten anschließenden Gewindeschaft gebildete, an den Sockel anlegbare, kragenartige Schulter bestimmt werden.

Zur Meidung bauseitiger Vorkehrungen, wie Aussparungen ist es zweckmässig, wenn die Gewindeschaftlänge an der Lagerschale nicht länger als die Höhe des Sockels ausgebildet ist.

Die erfindungsgemässe Vorrichtung erweist sich anwendungs- und montagefreundlich, wenn sie in der Achse ihrer Erstreckung eine zylindrische Form aufweist.

Zur Höhenverstellung der Vorrichtung eignet sich eine formschlüssige Antriebsverbindung am Umfang der kragenartigen Schulter der Lagerschale, wobei zur Betätigung ein komplementär ausgebildeter Schlüssel verwendbar ist.

Aufgrund des Feingewindes des Gewindeschafts an der Lagerschale ist ein feinfühliges Verstellen möglich und werden die Festigkeitseigenschaften des Gewindes begünstigt.

Nachstehend wird der Erfindungsgegenstand anhand eines in der einzigen Figur der Zeichnung dargestellten Beispiels näher erörtert.

Diese Zeichnung zeigt auf der rechten Seite der senkrechten Mittellinie eine Längsdarstellung einer Lastaufnahmevorrichtung 1 für die Bodenverankerung und Nievellierung sowie zum Ausrichten zusammenwirkender Antriebsorgane (Wellen) zweier gleichartiger oder unterschiedlicher Aggregate in minimaler Einstellhöhe und auf der linken Seite eine Ansicht des in der Höhe verstellten Auflagers. Zu diesen Zwecken weist die Lastaufnahmevorrichtung 1 einen ringförmigen Sockel 2 auf, der auf den Boden absetzbar ist und an der Innenseite ein Feingewinde 3 besitzt. Das Gewinde 3 dient der Aufnahme der Lagerschale 4 eines zweiteiligen Auflagers 5, wozu ein an die Lagerschale 4 anschliessender Gewindeschaft 6 vorgesehen ist. In der Lagerschale 4 liegt ein (kugelig) konvex bzw. komplementär ausgebildeter Druckring 7 auf, der sich an die Abstellfläche einer Last selbsttätig anpasst und eine ungleichmässige Belastung des Gewindes verhindert. Dieser bewegliche Druckring 7 weist eine konzentrische Bohrung 8 auf, die einen gegenüber der von oben die Vorrichtung 1 durchdringenden und in den Boden oder Unterbau einschraubbaren Spannschraube (nicht gezeigt) einen grösseren Durchmesser aufweist. Die Bohrung 9 der Lagerschale 4 des Auflagers 5 ist als Durchtrittsöffnung der Spannschraube ausgebildet und weist demgemäss einen dazu geeigneten Durchmesser auf. Als Gegenspannorgan der Spannschraube ist ein im Boden versetzbarer Dübel oder dgl. Verankerungselement vorgesehen. Die Höhe des Sockels 4 sollte der Gewindeschaftlänge 6 entsprechend bzw. nach deren Belastbarkeit gewählt werden, jedoch so, dass der Boden keine Aussparung erfährt. Alle Teile der Vorrichtung 1 weisen den gleichen Durchmesser auf und bilden gemeinsam eine zylindrische Form.
Am Umfang der kragenartigen Schulter 10 der verdrehbaren Lagerschale 4 sind gleichmässig verteilt Sacklöcher 11 angeordnet, an denen ein passender Schlüssel mit Zapfen ansetzbar ist.

## Patentansprüche

1. Lastaufnahmevorrichtung zum Verankern und/oder ausgerichteten Aufstellen von Maschinen, Aggregaten und dergleichen auf einem Unterbau, aufweisend:
(a) einen unteren Sockel (2) zum Aufsetzen auf den Unterbau, welcher Sockel (2) eine axiale Bohrung mit Innengewinde (3) aufweist;
(b) ein an der Oberseite konkav ausgebildetes Lagerschalenteil (4), das mit einem nach unten ragenden Gewindeschaft (6) in das Innengewinde (3) des Sockels (2) eingeschraubt und durch Verdrehen höhenverstellbar ist;
(c) einen auf dem Lagerschalenteil (4) angeordneten, an seiner Unterseite konvexen Druckring (7), der relativ zu dem Lagerschalenteil (4) winkelbeweglich ist; und
(d) eine axiale Durchtrittsöffnung (9) in dem Lagerschalenteil (4), so daß eine Spannschraube durch das Lagerschalenteil (4) und den Druckring (7) hindurchführbar ist,
**dadurch gekennzeichnet,**
(e) daß die axiale Bohrung bis zur unteren Anschlußfläche des Sockels (2) durchgeht;
(f) und daß der Gewindeschaft (6) ein Feingewinde aufweist.

2. Vorrichtung nach Anspruch 1,
dadurch gekennzeichnet, daß das Lagerschalenteil (4) am Übergang zu dem Gewindeschaft (6) eine kragenartige Schulter (10) zur Anlage an dem Sockel (2) aufweist.

3. Vorrichtung nach Anspruch 1 oder 2,
dadurch gekennzeichnet, daß die Länge des Gewindeschafts (6) gleich oder kleiner als die Höhe des Sockels (2) ist.

4. Vorrichtung nach einem der Ansprüche 1 bis 3,
dadurch gekennzeichnet, daß sie eine insgesamt zylindrische Form hat.

5. Vorrichtung nach einem der Ansprüche 1 bis 4,
dadurch gekennzeichnet, daß ein kragenartiger, oberhalb des Gewindeschafts (6) befindlicher Bereich des Lagerschalenteils (4) am Umfang eine Einrichtung (11) zum formschlüssigen Ansetzen eines Werkzeugs zum Verdrehen des Lagerschalenteils (4) aufweist.

6. Vorrichtung nach einem der Ansprüche 1 bis 5,
dadurch gekennzeichnet, daß sie im Verankerungszustand von einer in den Unterbau eingeschraubten Spannschraube durchsetzt ist.

## Claims

1. A load supporting device for anchoring and/or levelling machines, assemblies and the like on top of a substructure, siad device including
a) a lower base (2) to be placed on the substructure, said lower base (2) including an axial bore having an internal thread (3);
b) a bearing shell member (4) which is concave on its upper side and screwed into the internal thread (3) of the lower base (2) by a threaded shaft (6) pointing downwards, and is adjustable in height by turning;
c) a compression ring (7) located on the bearing shell (4) and being convex on its lower side and tiltable relatively to the bearing shell member (4); and
d) an axial passage (9) within the bearing shell member (4) go that a tensioning screw is insertable through the bearing shell member (4) and the compression ring (7),
**characterized in that**
e) the axial passage (9) extends to the lower contact area of the lower base (2); and
f) the threaded shaft (6) has a fine pitch thread.

2. Device according to claim 1,
characterized in that the bearing shell member (4) has a collar-like shoulder (10) at the transition to the threaded shaft (6) for engaging the lower base (2).

3. Device according to claim 1 or 2,
characterized in that the length of the threaded shaft (6) is equal to or smaller than the height of the lower base (2)

4. Device according to any of claims 1 to 3,
characterized in that it has a generally cylindrical shape.

5. Device according to any of claims 1 to 4,
characterized in that a collar-like portion of the bearing shell member (4) , located above the threaded shaft (6), comprises means for positively engaging a tool at its circumference for turning the bearing shell member (4).

6. Device according to any of claims 1 to 5,
characterized in that a tensioning screw screwed into the substructure is passing through it when anchored.

## Revendications

1. Dispositif de support pour une charge destiné à l'ancrage et/ou le positionnement ajusté d'une machine, d'appareils, etc. sur une base, comportant :
(a) un socle inférieur (2) destiné à être positionné sur la base, ledit socle (2) comportant un alésage axial présentant un filetage intérieur (3);
(b) une partie de palier sphérique (4) formée, sur son côté supérieur, de façon concave, et susceptible d'être vissée dans le filetage intérieur (3) du socle (2) au moyen d'une tige filetée saillant vers le bas de façon à pouvoir être ajustée dans sa hauteur par rotation;
(c) un anneau de pression (7) positionné sur la partie de palier sphérique (4) et formé, sur son côté inférieur, de façon convexe, ledit anneau de pression (7) étant angulairement mobile par rapport à la partie de palier sphérique (4); et
(d) un passage axial (9) dans la partie de palier sphérique (4), permettant le passage d'un boulon de serrage au travers de la partie de palier sphérique (4) et de l'anneau de pression (7),
caractérisé en ce que
(e) l'alésage axial s'étend jusqu'à la surface de connexion inférieure du socle (2);
(f) et que la tige filetée (6) comporte un filetage fin.

2. Dispositif selon la revendication 1, caractérisé en ce que la partie de palier sphérique (4) comporte un épaulement en forme de collerette (10) au niveau de la transition vers la tige filetée (6) pour buter contre le socle (2).

3. Dispositif selon la revendication 1 ou 2, caractérisé en ce que la longueur de la tige filetée (6) est égale ou inférieure à la hauteur du socle (2).

4. Dispositif selon l'une des revendications 1 à 3, caractérisé en ce qu'il présente dans sa totalité une forme cylindrique.

5. Dispositif selon l'une des revendications 1 à 4, caractérisé en ce qu'une zone de la partie du palier sphérique (4) en forme d'une collerette, et située au-dessus de la tige filetée (6), comporte sur sa périphérie un moyen (11) pour attacher au moyen des parties comportant des formes correspondantes, un outil destine à la rotation de la partie de palier sphérique (4).

6. Dispositif selon l'une des revendications 1 à 5, caractérisé en ce qu'il est, dans sa condition d'ancrage, pénétré par un boulon de serrage qui est vissé dans la base.
